# EUROPEAN PATENT APPLICATION

(11) **EP 2 963 092 A1**
(43) Date of publication of application: **06.01.2016**
(21) Application number: 14175075.2
(22) Date of filing: 30.06.2014
(51) Int. Cl.: C09D 129/14, B65D 83/14, C08L 29/14, C08L 61/28

(54) **A COATING COMPOSITION**

(71) Applicant: PPG Industries Ohio Inc., Cleveland, OH 44111 (US)
(72) Inventor: Ponjakin, Irina, 72411 Bodelshausen (DE); Braun, Jörg, 72411 Bodelshausen (DE)
(74) Representative: Appleyard Lees

(57) **Abstract**

A coating composition, the coating composition comprising:
a) a first polyvinyl butyral polymer material having a weight-average molecular weight (Mw) of 10,000 to 20,000 Daltons,
b) a second polyvinyl butyral polymer material having a weight-average molecular weight (Mw) of 25,000 to 75,000 Daltons and
c) an aminoplast resin.

## Description

The present invention relates to coating compositions. In particular to coating compositions for use in food and/or beverage containers and/or monobloc aerosol cans and tubes.

A wide variety of coatings have been used to coat food and/or beverage containers. The coating compositions need to have certain properties such as being capable of high speed application, having excellent adhesion to the substrate, being safe for food contact and having properties once cured that are suitable for their end use.

Many of the coating compositions currently used for food and beverage containers contain epoxy resins. Such epoxy resins are typically formed from polyglycidyl ethers of bisphenol A (BPA). BPA is perceived as being harmful to human health and it is therefore desirable to eliminate it from coatings for food and/or beverage packaging containers. Derivatives of BPA such as diglycidyl ethers of bisphenol A (BADGE), epoxy novolak resins and polyols prepared from BPA and bisphenol F (BPF) are also problematic. Therefore there is a desire to provide coating compositions for food and beverage containers which are free from BPA, BADGE and/or other derivatives, but which retain the desired properties as described above.

The present invention provides one or more solutions to the above mentioned or other problems.

According to a first aspect of the present invention there is provided a coating composition, the coating composition comprising:
a) a first polyvinyl butyral polymer material having a weight-average molecular weight (Mw) of 10,000 to 20,000 Daltons,
b) a second polyvinyl butyral polymer material having a weight-average molecular weight (Mw) of 25,000 to 75,000 Daltons, and
c) an aminoplast resin.

The first polyvinyl butyral polymer material (a) and the second polyvinyl butyral polymer material (b) may be produced by any suitable method. Such polymer materials may be produced by reacting a polyvinyl alcohol with butyraldehyde. Polyvinyl alcohols may be produced by the polymerisation of vinyl acetate monomer and the subsequent, alkaline-catalysed methanolysis of the polyvinyl acetate obtained. The acetalisation reaction of polyvinyl alcohol and butyraldehyde is not quantitative, so the resulting polyvinyl butyral may contain a certain amount of hydroxyl groups. In addition, a small amount of acetyl groups may remain in the polymer chain.

The coating composition may comprise any suitable polyvinyl butyral polymer material. In certain embodiments, the coating composition may comprise commercially available polyvinyl butyral polymer materials. Suitable commercially available polyvinyl butyral polymer materials include, but are not limited to the following: the MOWITAL (registered trademark) and PIOLOFORM (registered trademark) lines of polyvinyl butyral resins commercially available from Kuraray America, Inc., New York, New York; the BUTVAR (registered trademark) line of polyvinyl butyral resins commercially available from Solutia Inc.; the S-LEC B line of polyvinyl butyral resins commercially available from Sekisui Chemical Co. LTD; and combinations thereof.

In certain embodiments, the first polyvinyl butyral polymer material may be MOWITAL (registered trademark) B 16 H or MOWITAL (registered trademark) B 16 S which are commercially available from Kuraray America, Inc., New York, New York. Suitably, the first polyvinyl butyral polymer material may be MOWITAL (registered trademark) B 16 S.

In certain embodiments, the second polyvinyl butyral polymer material may be MOWITAL (registered trademark) B 30 HH which is commercially available from Kuraray America, Inc., New York, New York.

The first polyvinyl butyral polymer material may have any suitable weight-average molecular weight (Mw). In certain embodiments, the first polyvinyl butyral polymer material may have an Mw from about 10,000 to 20,000 Daltons (Da = g/mole), such as from about 12,000 to 18,000 Da, or even from about 15,000 to 17,000 Da. Suitably, the first polyvinyl butyral polymer material may have an Mw of about 16,000 Da.

In certain embodiments, the first polyvinyl butyral polymer material may have an Mw of at least about 10,000 Daltons (Da = g/mole), suitably at least about 12,000 Da, such as at least about 15,000 Da. In certain embodiments, the first polyvinyl butyral polymer material may have an Mw of up to about 20,000 Da, suitably up to about 18,000 Da, such as up to about 17,000 Da. Suitably, the first polyvinyl butyral polymer material may have an Mw from about 10,000 Da to about 20,000 Da, suitably from about 12,000 Da to about 20,000 Da, such as from about 15,000 Da to about 20,000 Da. Suitably, the first polyvinyl butyral polymer material may have an Mw from about 10,000 Da to about 18,000 Da, suitably from about 12,000 Da to about 18,000 Da, such as from about 15,000 Da to about 18,000 Da. Suitably, the first polyvinyl butyral polymer material may have an Mw from about 10,000 Da to about 17,000 Da, suitably from about 12,000 Da to about 17,000 Da, such as from about 15,000 Da to about 17,000 Da.

Suitably, the first polyvinyl butyral polymer material has an Mw from about 10,000 Da to 20,000 Da.

The weight-average molecular weight may be measured by any suitable method. Techniques to measure the weight-average molecular weight will be well known to a person skilled in the art. The Mw values and ranges given herein are as determined by gel permeation chromatography using a polystyrene standard according to ASTM D6579-11 ("Standard Practice for Molecular Weight Averages and Molecular Weight Distribution of Hydrocarbon, Rosin and Terpene Resins by Size Exclusion Chromatography". UV detector; 254nm, solvent: unstabilised THF, retention time marker: toluene, sample concentration: 2mg/ml).

A person skilled in the art will appreciate that the methods used for measuring the weight-average molecular weight may also be used to measure the number-average molecular weight.

The first polyvinyl butyral polymer material may have any suitable degree of butyration, which may be defined as the proportion of hydroxyl groups which are reacted with the butyraldehyde. In certain embodiments, the first polyvinyl butyral polymer material may have a degree of butyration from about 10 to 100 mol%, suitably from about 30 to 100 mol%, such as from about 40 to 95 mol%, or even from about 50 to 95 mol%. Suitably, the first polyvinyl butyral polymer material may have a degree of butyration from about 70 to 95 mol%. Suitably, the first polyvinyl butyral polymer material may have a degree of butyration from about 78 to 85 mol%.

The first polyvinyl butyral polymer material may have any suitable residual hydroxyl groups (OH) content from the polyvinyl alcohol. In certain embodiments, the first polyvinyl butyral polymer material may have a residual OH content from about 1 to 20 mol% such as from about 5 to 20 mol%, or even from about 10 to 20 mol%. Suitably, the first polyvinyl butyral polymer material may have an OH content of about 14 to 18 mol%. In this context "residual hydroxyl group" refers to unreacted hydroxyl groups.

The first polyvinyl butyral polymer material may have any suitable glass transition temperature (Tg). In certain embodiments, the first polyvinyl butyral polymer material may have a Tg from about 40 to 100 °C, suitably from about 50 to 90 °C, such as from about 55 to 70 °C.

The Tg of the first polyvinyl butyral polymer material may be measured by any suitable method. Methods to measure Tg will be well known to a person skilled in the art. Suitably, the Tg is measured according to ASTM D6604-00(2013) ("Standard Practice for Glass Transition Temperatures of Hydrocarbon Resins by Differential Scanning Calorimetry". Heat-flux differential scanning calorimetry (DSC), sample pans: aluminium, reference: blank, calibration: indium and mercury, sample weight: 10mg, heating rate: 20°C/min).

The second polyvinyl butyral polymer material may have any suitable weight-average molecular weight (Mw). In certain embodiments, the second polyvinyl butyral polymer material may have an Mw from about 25,000 to 75,000 Daltons (Da = g/mole), suitably from about 26,000 to 50,000 Da, such as from about 28,000 to 40,000 Da, or even from about 29,000 to 35,000 Da. Suitably, the second polyvinyl butyral polymer material may have an MW from about 25,000 to 35,000 Da. Suitably, the second polyvinyl butyral polymer material may have an Mw of about 30,000 Da.

In certain embodiments, the second polyvinyl butyral polymer material may have an Mw of at least about 25,000 Daltons (Da = g/mole), suitably at least about 26,000 Da, such as at least about 28,000 Da, or even at least about 29,000 Daltons. In certain embodiments, the second polyvinyl butyral polymer material may have an Mw of up to about 75,000 Da, suitably up to about 50,000 Da, such as up to about 35,000 Da, or even up to about 31,000 Da. Suitably, the second polyvinyl butyral polymer material may have an Mw from about 25,000 Da to about 75,000 Da, suitably from about 26,000 Da to about 75,000 Da, such as from about 28,000 Da to about 75,000 Da, or even from about 29,000 Da to about 75,000 Da. Suitably, the second polyvinyl butyral polymer material may have an Mw from about 25,000 Da to about 50,000 Da, suitably from about 26,000 Da to about 50,000Da, such as from about 28,000 Da to about 50,000 Da, or even from about 29,000 Da to about 50,000 Da. Suitably, the second polyvinyl butyral polymer material may have an Mw from about 25,000 Da to about 40,000 Da, suitably from about 26,000 Da to about 40,000 Da, such as from about 28,000 Da to about 40,000 Da, or even from about 29,000 Da to about 40,000 Da. Suitably, the second polyvinyl butyral polymer material may have an Mw from about 25,000 Da to about 35,000 Da, suitably from about 26,000 Da to about 35,000 Da, such as from about 28,000 Da to about 35,000 Da, or even from about 29,000 Da to about 35,000 Da.

Suitably, the second polyvinyl butyral polymer material has an Mw from about 25,000 Da to 75,000 Da.

The second polyvinyl butyral polymer material may have any suitable degree of butyration, which may be defined as the proportion of hydroxyl groups which are reacted with the butyraldehyde. In certain embodiments, the second polyvinyl butyral polymer material may have a degree of butyration from about 10 to 100 mol%, suitably from about 30 to 100 mol%, such as from about 40 to 95 mol%, or even from about 50 to 95 mol%. Suitably, the second polyvinyl butyral polymer material may have a degree of butyration from about 75 to 95 mol%. Suitably, the second polyvinyl butyral polymer material may have a degree of butyration from about 82 to 88 mol%.

The second polyvinyl butyral polymer material may have any suitable residual hydroxyl group (OH) content. In certain embodiments, the second polyvinyl butyral polymer material may have a residual OH content from about 10 to 50 mol%, such as from about 10 to 40 mol%, or even from about 15 to 30 mol%. Suitably, the second polyvinyl butyral polymer material may have an OH content of about 10 to 15 mol%. In this context "residual hydroxyl groups" refers to unreacted hydroxyl groups.

Suitably, the second polyvinyl butyral polymer material may have a lower hydroxyl (OH) content than the first polyvinyl butyral polymer material.

The second polyvinyl butyral polymer material may have any suitable glass transition temperature (Tg). In certain embodiments, the first polyvinyl butyral polymer material may have a Tg from about 40 to 90 °C, suitably from about 50 to 80 °C, or even from about 60 to 70 °C.

The Tg of the second polyvinyl butyral polymer material may be measured by any suitable method. Methods to measure Tg will be well known to a person skilled in the art. Suitably, the Tg is measured according to ASTM D6604-00(2013) ("Standard Practice for Glass Transition Temperatures of Hydrocarbon Resins by Differential Scanning Calorimetry". Heat-flux differential scanning calorimetry (DSC), sample pans: aluminium, reference: blank, calibration: indium and mercury, sample weight: 10mg, heating rate: 20°C/min).

The coating composition may comprise any suitable aminoplast resin. "Aminoplast resin" and like terms, as used herein, refers to compounds formed from the reaction of a triazine, such as melamine or benzoguanamine, with an aldehyde, such as formaldehyde. Suitably, the resultant compounds may be etherified with an alcohol such as methanol, ethanol, butanol or combinations thereof. The preparation and use of aminoplast resins is described in "The Chemistry and Applications of Amino Crosslinking Agents or Aminoplast", Vol V, Part II, page 21 ff., edited by Dr Oldring; John Wiley and Sons/Cita Technology Limited, London, 1998. Suitable examples of commercially available aminoplast resins include but are not restricted to those sold under the trademark MAPRENAL® such as MAPRENAL® MF980, MAPRENAL®I MF900, (commercially available from Ineos Melamines); RESIMENE 745 or RESIMENE 747 (commercially available from Ineos Melamines); those sold under the trademark CYMEL® such as CYMEL 303 and CYMEL 1128 or CYMEL MM100 (commercially available from Cytec Industries); those sold under the trademark KOMELOL such as KOMELOL MM 90/GE, KOMELOL MM 90/V, KOMELOL TMM-85 and KOMELOL PMM-65 (commercially available from Melamin Kocevje); butylated methylol melamine type resins such as CYMEL 1156 and CYMEL 1158 (commercially available from Cytec Industries); mixed ether type methylal melamine resins such as CYMEL 1116, CYMEL 1130, CYMEL 1133 and CYMEL 1168 (commercially available from Cytec Industries); part methylolated and part methylated melamine type resins such as CYMEL 370, CYMEL 325 and CYMEL 327 (commercially available from Cytec Industries); benzoguanamine formaldehyde type materials such as CYMEL 1123 (commercially available from Cytec Industries), Itamin BG143 (commercially available from Galstaff Multiresine) and URAMEX BF892 (commercially available from DSM); and glycouril based materials such as CYMEL 1170 and CYMEL 1172 (commercially available from Cytec Industries).

Suitably, the aminoplast resin comprises a melamine resin.

"Melamine resin", as used herein, refers to condensation products of melamine with aldehydes, particularly formaldehyde. In certain embodiments the melamine resin may optionally be modified with an alcohol, urea or phenol. In certain embodiments, the melamine resin may be a monomer or a polymer. For the avoidance of doubt, the formula of melamine is shown in formula (I) below:

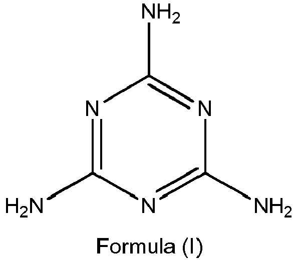

Accordingly, the general formula of a melamine resin is shown in formula (II) below: 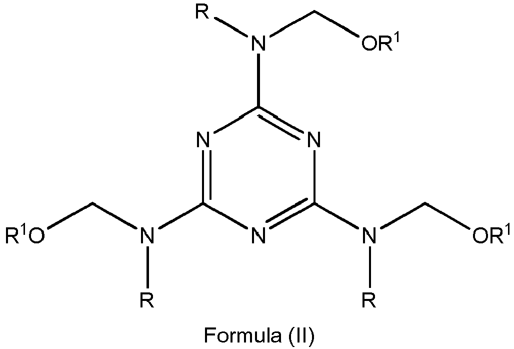 wherein each R group is independently hydrogen or CH₂OR¹; suitably CH₂OR¹; each R¹ group is independently hydrogen or C₁-C₁₂ alkyl, suitably C₁-C₄ alkyl, such as methyl; and wherein the compound according to formula (II) may be a monomer or a polymer.

Suitable examples of melamine resins include, but are not limited to the following: partially methylated melamines; tri(methoxymethyl) melamine; high imino methylated melamine; high imino methylated/butylated melamine; partially isobutylated/butylated melamine; hexa(methoxymethyl) melamine; or mixtures thereof.

Suitably, the melamine resin comprises hexa(methoxymethyl) melamine (HMMM).

Suitably, the aminoplast resin comprises hexa(methoxymethyl) melamine (HMMM).

Suitable examples of commercially available melamine resins include but are not restricted to those sold under the trademark MAPRENAL® such as MAPRENAL® MF980 and those sold under the trademark CYMEL® such as CYMEL 303 and CYMEL 1128, available from Cytec Industries and those sold under the trademark KOMELOL such as KOMELOL MM 90/GE, KOMELOL MM 90/V, KOMELOL TMM-85 and KOMELOL PMM-65, available from Melamin Kocevje.

The first polyvinyl butyral polymer material may be present in the coating composition in any suitable amount. In certain embodiments, the coating composition may comprise from about 5 to 90 wt%, such as from about 5 to 50 wt%, or even from about 10 to 40 wt% of the first polyvinyl butyral polymer material based on the total solid weight of the coating composition. Suitably, the coating composition may comprise about 15 to 25 wt% of the first polyvinyl butyral polymer material based on the total solid weight of the coating composition.

The second polyvinyl butyral polymer material may be present in the coating composition in any suitable amount. In certain embodiments, the coating composition may comprise from about 5 to 90 wt%, such as from about 5 to 50 wt%, or even from about 10 to 40 wt% of the second polyvinyl butyral polymer material based on the total solid weight of the coating composition. Suitably, the coating composition may comprise about 15 to 25 wt% of the second polyvinyl butyral polymer material based on the total solid weight of the coating composition.

The aminoplast resin may be present in the coating composition in any suitable amount. In certain embodiments, the coating composition may comprise from about 0.01 to 10 wt%, suitably from about 0.01 to 5 wt%, such as from about 0.05 to 5 wt%, or even from about 0.1 to 1 wt% of the aminoplast resin based on the total solid weight of the coating composition.

The coating composition may comprise any suitable weight ratio of components (a):(b). In certain embodiments, the weight ratio of (a):(b) may range from about 10:1 to 1:10, suitably from about 7:1 to 1:7, such as from about 5:1 to 1:5, or even from about 2:1 to 1:2.

Suitably, the weight ratio of (a):(b) in the coating composition may be about 1:1.

In certain embodiments, the weight ratio of (a):(b) may be at least 10:1, suitably at least 7:1, such as about 5:1 or even about 2:1. In certain embodiments, the weight ratio of (a):(b) may be up to about 1:10, suitably up to about 1:7, such as up to about 1:5, or even up to about 1:2. In certain embodiments, the weight ratio of (a):(b) may be from about 10:1 to 1:10, suitably from about 7:1 to 1:10, such as from about 5:1 to 1:10, or even from about 2:1 to 1:10. In certain embodiments, the weight ratio of (a):(b) may be from about 10:1 to 1:7, suitably from about 7:1 to 1:7, such as from about 5:1 to 1:7, or even from about 2:1 to 1:7. In certain embodiments, the weight ratio of (a):(b) may be from about 10:1 to 1:5, suitably from about 7:1 to 1:5, such as from about 5:1 to 1:5, or even from about 2:1 to 1:5. In certain embodiments, the weight ratio of (a):(b) may be from about 10:1 to 1:2, suitably from about 7:1 to 1:2, such as from about 5:1 to 1:2, or even from about 2:1 to 1:2.

The coating composition may comprise any suitable weight ratio of components (a)+(b):(c). In certain embodiments, the weight ratio of (a)+(b):(c) may range from about 200:5 to 20:1, suitably from about 150:1 to 30:1, such as from about 120:1 to 40:1, or even from about 100:1 to 50:1. Suitably, the weight ratio of (a)+(b):(c) in the coating composition may be about 80:1.

In certain embodiments the weight ratio of components (a)+(b):(c) may be at least about 200:1, suitably at least about 150:1, such as about 120:1, or even at least 100:1. In certain embodiments, the weight ratio of components (a)+(b):(c) may be up to about 20:1, suitably up to about 30:1, such as up to about 40:1, or even up to about 50:1. In certain embodiments, the weight ratio of components (a)+(b):(c) may be from about 200:1 to 20:1, suitably from about 150:1 to 20:1, such as from about 120:1 to 20:1, or even from about 100:1 to 20:1. In certain embodiments, the weight ratio of components (a)+(b):(c) may be from about 200:1 to 30:1, suitably from about 150:1 to 30:1, such as from about 120:1 to 30:1, or even from about 100:1 to 30:1. In certain embodiments, the weight ratio of components (a)+(b):(c) may be from about 200:1 to 40:1, suitably from about 150:1 to 40:1, such as from about 120:1 to 40:1, or even from about 100:1 to 40:1. In certain embodiments, the weight ratio of components (a)+(b):(c) may be from about 200:1 to 50:1, suitably from about 150:1 to 50:1, such as from about 120:1 to 50:1, or even from about 100:1 to 50:1.

The coating composition may further comprise a solvent. The coating composition may comprise a single solvent or a mixture of solvents. The solvent may comprise water, an organic solvent, a mixture of water and an organic solvent or a mixture of organic solvents.

The organic solvent suitably has sufficient volatility to essentially entirely evaporate from the coating composition during the curing process. As a non-limiting example, the curing process may be by heating at 130-260 °C for 1-15 minutes.

Suitable organic solvents include, but are not limited to the following: aliphatic hydrocarbons such as mineral spirits and high flash point naphtha; aromatic hydrocarbons such as benzene; toluene; xylene; solvent naphtha 100, 150, 200; those available from Exxon-Mobil Chemical Company under the SOLVESSO trade name; alcohols such as ethanol; n-propanol; isopropanol; and n-butanol; ketones such as acetone; cyclohexanone; methylisobutyl ketone; methyl ethyl ketone; esters such as ethyl acetate; butyl acetate; n-hexyl acetate; dibasic esters; butoxyl; glycols such as butyl glycol; glycol ethers such as 1-methoxypropanol; ethylene glycol monomethyl ether; ethylene glycol monobutyl ether and combinations thereof. The solvent, when present, may suitably be used in the coating composition in amounts from about 10 to 90 wt%, such as from about 20 to 80 wt%, or even from about 30 to 70 wt% based on the total solid weight of the coating composition.

In certain embodiments the coating compositions may further comprise an additional crosslinking agent. The additional crosslinking agent may be any suitable crosslinking agent. Suitable additional crosslinking agents will be well known to the person skilled in the art. Suitable crosslinking agents include, but are not limited to the following: phenolic resins (or phenol-formaldehyde resins); amino resins; epoxy resins; isocyanate resins; beta-hydroxy (alkyl) amide resins; alkylated carbamate resins; polyacids; anhydrides; organometallic acid-functional materials; polyamines; polyamides and combinations thereof. In certain embodiments, the additional crosslinking agent comprises a phenolic resin or an isocyanate resin or a combination thereof.

In certain embodiments, the additional crosslinking agent may comprise a phenolic resin. Non-limiting examples of phenolic resins are those formed from the reaction of a phenol with formaldehyde. Non-limiting examples of phenols which may be used to form phenolic resins are phenol, butyl phenol, xylenol and cresol. General preparation of phenolic resins is described in "The Chemistry and Application of Phenolic Resins or Phenoplasts", Vol V, Part I, edited by Dr Oldring; John Wiley and Sons/Cita Technology Limited, London, 1997. Suitably, the phenolic resins are of the resol type. By "resol type" we mean resins formed in the presence of a basic (alkaline) catalyst and optionally an excess of formaldehyde. Suitable examples of commercially available phenolic resins include, but are not limited to PHENODUR® PR285, VPR1785, PR517 and BR612 and resins sold under the trademark BAKELITE® such as BAKELITE 6582 LB.

In certain embodiments, the additional crosslinking agent may comprise an isocyanate resin. Suitable isocyanates include but are not restricted to multifunctional isocyanates. Suitable examples of multifunctional polyisocyanates include, but are not limited to the following: aliphatic diisocyanates like hexamethylene diisocyanate and isophorone diisocyanate; and aromatic diisocyanates like toluene diisocyanate and 4,4'-diphenylmethane diisocyanate. The polyisocyanates may be blocked or unblocked. Examples of other suitable polyisocyanates include, but are non limited to the following: isocyanurate trimers; allophanates; uretdiones of diisocyanates; polycarbodiimides and combinations thereof. Suitable examples of commercially available polyisocyanates include but are not restricted to DESMODUR VP LS 2078/2 and DESMODUR N3390, which are sold by Bayer Corporation, and TOLONATE HDT90, which is sold by Rhodia Inc.

In certain embodiments, the coating composition may further comprise a catalyst. Any catalyst typically used to catalyse crosslinking reactions between polyvinyl butyral polymer materials and crosslinking agents, such as for example phenolic resins, may be used. Suitable catalysts will be well known to the person skilled in the art. Suitable catalysts include, but are not limited to the following: phosphoric acid; tannic acid; citric acid; malonic acid; alkyl aryl sulphonic acids such as dodecyl benzene sulphonic acid; methane sulphonic acid; para-toluene sulphonic acid; dinonyl naphthalene disulphonic acid; phenyl phosphinic acid, and combinations thereof. The catalyst, when present, may be used in the coating composition in any suitable amount. In certain embodiments the catalyst, when present, may be used in amounts from about 0.01 to 10 wt%, suitably from about 0.1 to 2 wt% based on the total solid weight of the coating composition.

In certain embodiments, the coating composition may further comprise an adhesion promoter. Examples of suitable adhesion promoters include, but are not limited to the following: trimellitic acid; carboxy functional resins such as PHENODUR® VPM1150; phosphatized polyester resins such as those described in US patent US2012/0301647; and combinations thereof.

The coating composition according to the present invention may optionally contain an additive or combination of additives. The coating composition may optionally contain any suitable additive. Suitable additives will be well known to the person skilled in the art. Examples of suitable additives include, but are not limited to the following: lubricants; pigments; plasticisers; surfactants; flow control agents; thixotropic agents; fillers; diluents; organic solvents and combinations thereof.

Suitable lubricants will be well known to the person skilled in the art. Suitable examples of lubricants include, but are not limited the following: carnauba wax and polyethylene type lubricants. In certain embodiments the lubricant, when present, may be used in the coating composition in amounts of at least 0.01 wt% based on the total solid weight of the coating composition.

Suitable pigments will be well known to the person skilled in the art. A suitable pigment may be, for example, titanium dioxide. The pigment, when present, may be used in the coating composition in any suitable amount. In certain embodiments, the pigment, when present, may be used in the coating composition in amounts up to about 90 wt%, such as up to about 50 wt%, or even up to about 10 wt% based on the total solid weight of the coating composition.

Surfactants may optionally be added to the coating composition in order to aid in flow and wetting of the substrate. Suitable surfactants will be well known to the person skilled in the art. Suitably the surfactant, when present, is chosen to be compatible with food and/or beverage container applications. Suitable surfactants include, but are not limited to the following: alkyl sulphates (e.g., sodium lauryl sulphate); ether sulphates; phosphate esters; sulphonates; and their various alkali, ammonium, amine salts; aliphatic alcohol ethoxylates; alkyl phenol ethoxylates (e.g. nonyl phenol polyether); salts and/or combinations thereof. The surfactants, when present, may be present in amounts from about 0.01 wt% to 10 wt% based on the total solid weight of the coating composition.

In certain embodiments, the coating compositions according to the present invention may be substantially free, may be essentially free or may be completely free of bisphenol A (BPA) and derivatives thereof. Derivatives of bisphenol A include, for example, bisphenol A diglycidyl ether (BADGE). In certain embodiments, the coating compositions according to the present invention may also be substantially free, essentially free or completely free of bisphenol F

(BPF) and derivatives thereof. Derivatives of bisphenol F include, for example, bisphenol F diglycidyl ether (BPFG). The compounds or derivatives thereof mentioned above may not be added to the composition intentionally but may be present in trace amounts because of unavoidable contamination from the environment. By "substantially free" we mean to refer to coating compositions containing less than about 1000 parts per million (ppm) of any of the compounds or derivatives thereof mentioned above. By "essentially free" we mean to refer to coating compositions containing less than about 100 ppm of any of the compounds or derivatives thereof mentioned above. By "completely free" we mean to refer to coating compositions containing less than about 20 parts per billion (ppb) of any of the compounds or derivatives thereof.

As used herein, the singular includes the plural and plural encompasses singular, unless specifically stated otherwise. For example, the use of the singular, i.e. "a" or "an", includes "one or more". In addition, as used herein, the use of "or" means "and/or" unless specifically stated otherwise, even though "and/or" may be explicitly used in certain instances.

The term "alk" or "alkyl", as used herein unless otherwise defined, relates to saturated hydrocarbon radicals being straight, branched, cyclic or polycyclic moieties or combinations thereof and contain 1 to 20 carbon atoms, suitably 1 to 10 carbon atoms, more suitably 1 to 8 carbon atoms, still more suitably 1 to 6 carbon atoms, yet more suitably 1 to 4 carbon atoms. These radicals may be optionally substituted with a chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, aryl or Het, wherein R¹⁹ to R²⁷ each independently represent hydrogen, aryl or alkyl, and/or be interrupted by an oxygen or sulphur atom, or by silano or dialkylsiloxane groups. Examples of such radicals may be independently selected from methyl, ethyl, n-propyl, isopropyl, n-butyl, isobutyl, sec-butyl, tert-butyl, 2-methylbutyl, pentyl, iso-amyl, hexyl, cyclohexyl, 3-methylpentyl, octyl and the like. The term "alkylene", as used herein, relates to a bivalent radical alkyl group as defined above. For example, an alkyl group such as methyl which would be represented as -CH₃, becomes methylene, -CH₂-, when represented as an alkylene. Other alkylene groups should be understood accordingly.

The term "alkenyl", as used herein, relates to hydrocarbon radicals having one or several, suitably up to 4, double bonds, being straight, branched, cyclic or polycyclic moieties or combinations thereof and containing from 2 to 18 carbon atoms, suitably 2 to 10 carbon atoms, more suitably from 2 to 8 carbon atoms, still more suitably 2 to 6 carbon atoms, yet more suitably 2 to 4 carbon atoms. These radicals may be optionally substituted with a hydroxyl, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, or aryl, wherein R¹⁹ to R²⁷ each independently represent hydrogen, aryl or alkyl, and/or be interrupted by an oxygen or sulphur atom, or by silano or dialkylsiloxane groups. Examples of such radicals may be independently selected from alkenyl groups include vinyl, allyl, isopropenyl, pentenyl, hexenyl, heptenyl, cyclopropenyl, cyclobutenyl, cyclopentenyl, cyclohexenyl, 1-propenyl, 2-butenyl, 2-methyl-2-butenyl, isoprenyl, farnesyl, geranyl, geranylgeranyl and the like. The term "alkenylene", as used herein, relates to a bivalent radical alkenyl group as defined above. For example, an alkenyl group such as ethenyl which would be represented as -CH=CH2, becomes ethenylene, - CH=CH-, when represented as an alkenylene. Other alkenylene groups should be understood accordingly.

The term "alkynyl", as used herein, relates to hydrocarbon radicals having one or several, suitably up to 4, triple bonds, being straight, branched, cyclic or polycyclic moieties or combinations thereof and having from 2 to 18 carbon atoms, suitably 2 to 10 carbon atoms, more suitably from 2 to 8 carbon atoms, still more suitably from 2 to 6 carbon atoms, yet more suitably 2 to 4 carbon atoms. These radicals may be optionally substituted with a hydroxy, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, or aryl, wherein R¹⁹ to R²⁷ each independently represent hydrogen, aryl or lower alkyl, and/or be interrupted by an oxygen or sulphur atom, or by silano or dialkylsiloxane groups. Examples of such radicals may be independently selected from alkynyl radicals include ethynyl, propynyl, propargyl, butynyl, pentynyl, hexynyl and the like. The term "alkynylene", as used herein, relates to a bivalent radical alkynyl group as defined above. For example, an alkynyl group such as ethynyl which would be represented as - C=CH, becomes ethynylene, -C=C-, when represented as an alkynylene. Other alkynylene groups should be understood accordingly.

The term "aryl" as used herein, relates to an organic radical derived from an aromatic hydrocarbon by removal of one hydrogen, and includes any monocyclic, bicyclic or polycyclic carbon ring of up to 7 members in each ring, wherein at least one ring is aromatic. These radicals may be optionally substituted with a hydroxy, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, or aryl, wherein R¹⁹ to R²⁷ each independently represent hydrogen, aryl or lower alkyl, and/or be interrupted by an oxygen or sulphur atom, or by silano or dialkylsilcon groups. Examples of such radicals may be independently selected from phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-methyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl, tetrahydronaphthyl, indanyl, biphenyl, phenanthryl, anthryl or acenaphthyl and the like. The term "arylene", as used herein, relates to a bivalent radical aryl group as defined above. For example, an aryl group such as phenyl which would be represented as -Ph, becomes phenylene, -Ph-, when represented as an arylene. Other arylene groups should be understood accordingly.

For the avoidance of doubt, the reference to alkyl, alkenyl, alkynyl, aryl or aralkyl in composite groups herein should be interpreted accordingly, for example the reference to alkyl in aminoalkyl or alk in alkoxyl should be interpreted as alk or alkyl above etc.

The coating compositions according to the present invention may be applied to any suitable substrate. Examples of suitable substrates include but are not limited to food and/or beverage containers and containers for aerosol applications. Suitably, the coating compositions may be applied to food and/or beverage cans. Examples of cans include, but are not limited to the following, two-piece cans, three-piece cans and the like. Suitably, the coating compositions may be applied to containers for aerosol applications such as, but not limited to, deodorant and hair spray containers. Examples of containers for aerosol applications include aluminium monobloc aerosol cans and tubes.

The coating compositions according to the present invention may be applied to the substrate by any suitable method. Methods of applying said coating compositions will be well known to a person skilled in the art. Suitable application methods include, but are not limited to the following, spray coating, roll coating, dipping and/or electrocoating. It will be appreciated by a person skilled in the art that for two-piece cans, the coating compositions may typically be applied by spray coating after the can is made. It will also be appreciated by the person skilled in the art that for three-piece cans, a flat sheet may typically be roll coated with the present coating compositions first and then the can may be formed. However, the application of the coating compositions is not limited to these methods. The coating compositions according to the present information may be applied to the interior and/or exterior surface or surfaces of the container. Suitably, all or part of the surface may be covered.

The coating compositions according to the present invention may be applied a substrate to any suitable dry film thickness. In certain embodiments the coating compositions may be applied to a dry film thickness from about 0.1µm (microns) to 2mm, suitably from about 3µm to 2mm, such as from about 3µm to 1mm, or even from about 3µm to 500 µm. In certain embodiments, the coating compositions may be applied to a dry film thickness from about 3 µm to 20 µm, suitably from 6µm to 14µm.

The coating composition according to the present invention may be applied to a substrate as a single layer or as part of a multi layer system. In certain embodiments, the coating composition may be applied as a single layer. In certain embodiments, the coating composition may be applied as the first coat of a multi coat system. Suitably, the coating composition may be applied as an undercoat or a primer. The second, third, fourth etc. coats may comprise any suitable paint such as those containing, for example, epoxy resins; polyester resins; polyurethane resins; polysiloxane resins; hydrocarbon resins or combinations thereof. In certain embodiments, the coating compositions may be applied on top of another paint layer as part of a multi layer system. For example, the coating composition may be applied on top of a primer. The coating compositions may form an intermediate layer or a top coat layer. The coating composition may be applied to a substrate once or multiple times. Any or all of the layers may be substantially free, essentially free or completely free of BPA, BPF and derivatives thereof.

According to a second aspect of the present invention there is provided a coated article, coated on at least a portion thereof with a coating composition, the coating composition comprising:
a) a first polyvinyl butyral polymer material having a weight-average molecular weight (Mw) of 10,000 to 20,000 Daltons,
b) a second polyvinyl butyral polymer material having a weight-average molecular weight (Mw) of 25,000 to 75,000 Daltons and
c) an aminoplast resin

According to a third aspect of the present invention there is provided an aluminium, steel or tin substrate coated on at least a portion thereof with a coating composition, the coating composition comprising:
a) a first polyvinyl butyral polymer material having a weight-average molecular weight (Mw) of 10,000 to 20,000 Daltons,
b) a second polyvinyl butyral polymer material having a weight-average molecular weight (Mw) of 25,000 to 75,000 Daltons and
c) an aminoplast resin.

According to a fourth aspect of the present invention there is provided an aerosol can coated on at least a portion thereof with a coating composition, the coating composition comprising:
a) a first polyvinyl butyral polymer material having a weight-average molecular weight (Mw) of 10,000 to 20,000 Daltons;
b) a second polyvinyl butyral polymer material having a weight-average molecular weight (Mw) of 25,000 to 75,000 Daltons; and
c) an aminoplast resin.

According to a further aspect of the present invention there is provided a food and/or beverage container coated on at least a portion thereof with a coating composition, the coating composition comprising:
a) a first polyvinyl butyral polymer material having a weight-average molecular weight (Mw) of 10,000 to 20,000 Daltons;
b) a second polyvinyl butyral polymer material having a weight-average molecular weight (Mw) of 25,000 to 75,000 Daltons; and
c) an aminoplast resin.

All of the features contained herein may be combined with any of the above aspects and in any combination.

For a better understanding of the invention, and to show how embodiments of the same may be carried into effect, reference will now be made, by way of example, to the following experimental data.

### Examples

### Polyvinyl Butyral Polymer Example 1

100g of polyvinyl butyral powder available commercially as MOWITAL™ B16S, 120g dibasic ester (Imsol R), 50g butyl acetate and 30g xylene were stirred for approximately 1 hour under a dissolver. After this time the loss due to solvent evaporation was measured as 65g and completed with xylene. 51g butyl acetate, 30.2g xylene, 1g BYK-313 and 67.3g dibasic ester (Imsol R) were further added. The solids content of the resultant solution of the first polyvinyl butyral was 19.6%.

### Polyvinyl Butyral Polymer Example 2

100g of polyvinyl butyral powder available commercially as MOWITAL™ B30HH, 240g dibasic ester (Imsol R), 100g butyl acetate and 60g xylene were stirred for approximately 1 hour under a dissolver. After this time the loss due to solvent evaporation was measured as 111g and completed with xylene. 1g BYK-313 and 50g dibasic ester (Imsol R) were further added. The solids content of the resultant solution of the second polyvinyl butyral was 16 wt%.

### Coating Compositions 1-4

Coating compositions 1-4 were prepared according to the formulations in Table 1.

### Coating Composition 5

Comparative coating composition 5 is the commercially available epoxy-phenolic lacquer, PPG 7940 (commercially available from PPG Industries, One PPG Place Pittsburgh, PA 15272 USA).

**Table 1 - Formulations of Coating Compositions**

| | Coating Composition 1 | Coating Composition 2 | Coating Composition 3 | Coating Composition 4 |
|---|---|---|---|---|
| Polyvinyl Butyral Polymer Example 1 / g | 24.9 | 24.9 | 24.9 | 24.9 |
| Polyvinyl Butyral Polymer Example 2 / g | 20.4 | 20.4 | 20.4 | 20.4 |
| Melamine Resin¹ / g | 0.1 | 0.1 | 0.1 | 0.1 |
| Isocyanate resin² / g | 8.0 | 6.0 | 4.0 | - |
| Crosslinker 1³ / g | 0.5 | 0.5 | 0.5 | 0.5 |
| Crosslinker 2⁴ / g | 8.0 | 10.0 | 12.0 | 16.0 |

| | | | | |
|---|---|---|---|---|
| ¹ Komelol MM90/GE HMMM resin ² DesmodurVP LS 2078/2 IDPI-polyisocyanate, blocked resin 3 Phenodur VPM-1150 4 Phenodur VPR 1785/50MP | | | | |

The properties of the coatings were tested via the following methods. Results are shown in Table 2.

**Preparation of test cans:** Coatings were coated onto aluminium monobloc cans. About 3 grams of coating formulations 1-4 were filled individually into an aluminium can and then drained for 10 minutes by standing the can upside down with a angle of 45°; thereby coating the internal of the can. Subsequently, the can was placed into a convection oven to be cured at 240°C for 5 minutes.

The coated cans were tested for coating thickness, for enamel ratings after the impact test , also called falling weight test, solvent resistance, cross cut adhesion and blush and cutting edge adhesion after exposure to boiling water and after sterilisation in water according to the procedures described below.

**Blue Test:** 1,5% basonyl violet 600 from BASF was dissolved in 10 vol% glycerin/38.30 vol% THFA/50.00 vol% 2-propanon and 0.2 vol% Tego Wet KL 245 from Evonik. Approximately 1-3ml of this solution was dropped on the surface of the dried coatings. After 5 minutes the solution was removed and the coatings were evaluated for colouring and softening and graded using a scale of 1-5, with 1 being the worst and 5 being the best.

**Coating Thickness:** Coating thickness was measured according to a non-destructive measurement of anodic coatings applied onto an aluminium base, using an ISOSCOPE MP30, coating thickness measuring instrument. The uncoated aluminium can was used for calibration after it had been flattened. The thickness of the coating of the coated cans was measured both on the side wall and on the bottom of the can. The measured thickness was reported in microns and represented either the average of 10 measurements or the lowest and highest values.

**Impact Test:** The impact test was carried out according to ASTM D2794. The bottom part of the coated can was cut at a height of 20 mm and then with the coated side facing down on a Teflon coated fixture. A 1 kg weight is dropped from a 1 meter height to strike an indentation. The test was repeated two times under the same conditions on two individual cans. The integrity of the coating was measured using a WACO Enamel Rater Instrument and a 1% salt solution containing 0.1 % dioctyl sodium sulfosuccinate and reported in milliamperes (mA).

**Solvent resistance (NMP Test):** Flattened parts of the coated cans were immersed in N-methyl pyrrolidone (NMP) in a closed glass container at room temperature for 24 hours. After this period, the coated cans were removed, washed with methyl ethyl ketone (MEK) and then dried. A hard rod coated with PTFE was brought into contact with the coating and moved 10 times over the coated surface with pressure. The coatings were checked for their ability to resist the chemical attack by NMP using a visual scale of 1-5, with 5 being the best.

**Boiling Water Test:** The coated parts of the can were immersed in boiling water at 100°C for 15 minutes and subsequently removed and dried. They were then tested for cross-cut adhesion and for cutting edge adhesion. Cross-cut adhesion was measured according to the DIN ISO 2409 standard. Briefly, a crosshatch grid was made in the film using a grid comb and was then covered with tape (grade TESA 4104 clear). Within 60 seconds of its application, the tape was removed rapidly. The grid area is then checked for removal of the coating from the substrate. The adhesion was scored in accordance with the following scale:

| | |
|---|---|
| **GT0** | The edges of the cuts are completely smooth; none of the squares of the grid is detached. |
| **GT1** | Small flakes of the coating are detached at intersections; less than 5% of the area is affected. |
| **GT2** | Some flakes of the coating are detached along the edges and/or at intersections of the incisions. The area affected is 5-15% of the grid |
| **GT3** | The coating has peeled along the edges and on parts of the squares of the grid. The area affected is 15-35% of the grid. |
| **GT4** | The coating has peeled along the edges of the incisions in large strips and some squares are totally detached. The area affected is 35-65% of the grid. |
| **GT5** | All degrees of peeling and flecking that can be not classified under GT4. |

Cutting edge adhesion was measured by the following method. The coated parts of the can were cut along the length of the can from the lowest film thickness to the highest film thickness using scissors. The cutting edge adhesion of the coating was evaluated according to the level of peeling from the substrate and using a rating 1-5, with 5 being the best.

**Sterilization in Water:** The coated parts of the can were immersed in water in a pressurisable metal container and placed into an autoclave where it was retorted at 129°C for 60 minutes. After this, the parts were removed and dried. Immediately upon removal from the retort solution, the coatings were tested in cross-cut adhesion and in cutting edge adhesion by the methods as described above.

**Table 2 - Test Results**

| | Coating Composition 1 | Coating Composition 2 | Coating Composition 3 | Coating Composition 4 | Comparative Coating Composition 5 |
|---|---|---|---|---|---|
| Aluminium monobloc cans curing: 5 mins, 240 °C | | | | | |
| Blue Test 5 min - B | 5 | 5 | 5 | 4 | 5 |
| Thickness Rim - A / µm | 13.3 | 12.4 | 8 | 9.6 | 12.0 |
| Thickness Rim - B / µm | 12.3 | 10.8 | 9.4 | 10.7 | 14.0 |
| Enamel rater - A / mA | 3.4 | 0.7 | 0.1 | 2.2 | 0 |
| Enamel rater - B / mA | 0.2 | 0 | 0 | 0.1 | 0.5 |
| Thickness - A (min/max) | 6.3/16.3 | 11.4/17.3 | 8.2/13.4 | 9.3/16.4 | 8/12 |
| Thickness - B (min/max) | 11.8/18.3 | 7.1/15.9 | 7.9/16.9 | 11.0/14.8 | 8/12 |

| Solvent resistance (NMP) Test, 24 hours | | | | | |
|---|---|---|---|---|---|
| NMP resistance - A | 4.5 | 5 | 5 | 5 | 5 |
| NMP resistance - B | 5 | 5 | 5 | 5 | 5 |

| Boiling Water Test, 15 mins, 100 °C | | | | | |
|---|---|---|---|---|---|
| Cross-cut Adhesion body-middle - A | GT0 | GT0 | GT0 | GT0 | GT0 |
| Cutting edge Adhesion / min thickness - A | 4.5 | 5 | 5 | 5 | 5 |
| Cutting edge Adhesion / max thickness - A | 4.5 | 5 | 5 | 4.5 | 5 |
| Cross-cut Adhesion body-middle - B | GT0 | GT0 | GT0 | GT0 | GT0 |
| Cutting edge Adhesion / min thickness - B | 5 | 4 | 5 | 5 | 5 |
| Cutting edge Adhesion / max thickness - B | 4 | 4 | 5 | 5 | 5 |

| Sterilisation, 1 hour, 129 °C, demineralised water | | | | | |
|---|---|---|---|---|---|
| Cross-cut Adhesion body-middle - A | 5 | 5 | 5 | 5 | 5 |
| Cutting edge Adhesion / min thickness - A | 2 | 4 | 4.5 | 5 | 5 |
| Cutting edge Adhesion / max thickness - A | 1.5 | 4 | 4.5 | 4.5 | 5 |
| Cross-cut Adhesion body-middle - B | 5 | 5 | 5 | 5 | 5 |
| Cutting edge Adhesion / min thickness - B | 4.5 | 5 | 5 | 5 | 5 |
| Cutting edge Adhesion / max thickness - B | 3 | 4 | 4.5 | 4.5 | 5 |

The results show that the coating compositions according to the present invention perform as well, or better, than coating compositions comprising epoxy-phenol resins.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A coating composition, the coating composition comprising:
a) a first polyvinyl butyral polymer material having a weight-average molecular weight (Mw) of 10,000 to 20,000 Daltons,
b) a second polyvinyl butyral polymer material having a weight-average molecular weight (Mw) of 25,000 to 75,000 Daltons and
c) an aminoplast resin.

2. A coating composition according to claim 1, wherein the first polyvinyl butyral polymer material has an OH content from 1 to 20 mol%.

3. A coating composition according to claim 1 or 2, wherein the second polyvinyl butyral polymer material has an OH content from 10 to 50 mol%.

4. A coating composition according to claims 1-3, wherein the aminoplast resin comprises a melamine resin.

5. A coating composition according to any preceding claim, wherein the aminoplast resin comprises hexa(methoxymethyl) melamine (HMMM).

6. A coating composition according to any preceding claim, wherein the coating composition comprises from 5 to 90 wt% of the first polyvinyl butyral polymer material based on the total solid weight of the coating composition.

7. A coating composition according to any preceding claim, wherein the coating composition comprises from 5 to 90 wt% of the second polyvinyl butyral polymer material based on the total solid weight of the coating composition.

8. A coating composition according to any preceding claim, wherein the coating composition comprises from 0.01 to 10 wt% of the aminoplast resin based on the total solid weight of the coating composition.

9. A coating composition according to any preceding claim, wherein the weight ratio of (a):(b) ranges from 10:1 to 1:10.

10. A coating composition according to any preceding claim, wherein the weight ratio of (a)+(b):(c) ranges from 200:1 to 20:1.

11. A coating composition according to any preceding claim, wherein the coating composition further comprises an additional crosslinking agent.

12. A coated article, coated on at least a portion thereof with a coating composition, the coating composition comprising:
a) a first polyvinyl butyral polymer material having a weight-average molecular weight (Mw) of 10,000 to 20,000 Daltons,
b) a second polyvinyl butyral polymer material having a weight-average molecular weight (Mw) of 25,000 to 75,000 Daltons and
c) an aminoplast resin

13. An aluminium, steel or tin substrate coated on at least a portion thereof with a coating composition, the coating composition comprising:
a) a first polyvinyl butyral polymer material having a weight-average molecular weight (Mw) of 10,000 to 20,000 Daltons,
b) a second polyvinyl butyral polymer material having a weight-average molecular weight (Mw) of 25,000 to 75,000 Daltons and
c) an aminoplast resin.

14. An aerosol can coated on at least a portion thereof with a coating composition, the coating composition comprising:
a) a first polyvinyl butyral polymer material having a weight-average molecular weight (Mw) of 10,000 to 20,000 Daltons;
b) a second polyvinyl butyral polymer material having a weight-average molecular weight (Mw) of 25,000 to 75,000 Daltons; and
c) an aminoplast resin.

15. A food and/or beverage container coated on at least a portion thereof with a coating composition, the coating composition comprising:
a) a first polyvinyl butyral polymer material having a weight-average molecular weight (Mw) of 10,000 to 20,000 Daltons;
b) a second polyvinyl butyral polymer material having a weight-average molecular weight (Mw) of 25,000 to 75,000 Daltons; and
c) an aminoplast resin.
